# EUROPÄISCHE PATENTSCHRIFT

(11) **EP 3 390 856 B1**
(45) Veröffentlichungstag und Bekanntmachung des Hinweises auf die Patenterteilung: **25.12.2019**
(21) Anmeldenummer: 16797517.6
(22) Anmeldetag: 15.11.2016
(51) Int. Cl.: F16F 7/12

(54) **AUFPRALLDÄMPFER, INSBESONDERE FÜR EIN SCHIENENFAHRZEUG**
IMPACT ABSORBER, IN PARTICULAR FOR A RAIL VEHICLE
AMORTISSEUR DE CHOCS, EN PARTICULIER POUR UN VÉHICULE FERROVIAIRE

(30) Priorität: 17.12.2015 DE 102015225812
(43) Veröffentlichungstag der Anmeldung: 24.10.2018
(73) Patentinhaber: ZF Friedrichshafen AG, 88046 Friedrichshafen (DE)
(72) Erfinder: KÖNENBERG, Herbert, 50321 Brühl (DE); WEYAND, Henrik, 53773 Hennef (DE); WIENS, Waldemar, 57539 Fürthen (DE)
(86) Internationale Anmeldenummer: PCT/EP2016/077645
(87) Internationale Veröffentlichungsnummer: WO 2017/102204

(56) Entgegenhaltungen:
- WO-A1-80/01829
- DE-A1- 19 745 656
- DE-A1-102013 202 194
- US-A- 5 427 214

## Beschreibung

Die Erfindung betrifft einen Aufpralldämpfer gemäß dem Oberbegriff von Patentanspruch 1.

Jedes Schienenfahrzeug verfügt über einen Aufpralldämpfer zur Energieabsorption im Aufprallereignis. Dabei wird bewusst eine irreversible Beschädigung des Aufpralldämpfers in Kauf genommen, indem ein Deformationsrohr durch eine fahrzeugseitige Deformationsmatrize gepresst und/oder das Deformationsrohr gefaltet wird.

Der von dem Aufpralldämpfer zu leistenden Energieabbau bedingt vielfach, dass das Deformationsrohr einerseits einen großen Durchmesser und/oder eine große Wandstärke aufweist. Dadurch ergibt sich eine große Masse des Aufpralldämpfers.

Aus der DE 197 45 656 A1 ist ein Aufpralldämpfer für Kraftfahrzeuge bekannt. Dieser Aufpralldämpfer umfasst zwei konzentrisch angeordnete Deformationsrohre, die durch die Ansteuerung eines Sperrteils mindestens zwei Absorptionskennlinien erzeugen können.

In der Ausführung nach den Figuren 2a bis 2c der DE 197 45 656 A1 umfasst der Aufpralldämpfer eine Matrize mit einer trichterförmigen Umformfläche und einem Deformationsrohr, das einen der trichterförmigen Umformfläche angepassten Konusbereich aufweist. Bei einem Aufprall wird das Deformationsrohr bedingt durch die Aufprallenergie durch die Matrize geschoben. Die Aufprallenergie wird dabei in Umformenergie umgesetzt.

Ein grundsätzliches Problem bei einem derartigen Aufpralldämpfer besteht darin, dass die Kraftwegkennlinie keinen linearen Verlauf aufweist, sondern tendenziell anfangs alternierend und dann auf einem konstanten Kraftniveau verläuft.

Das Dokument DE 10 2013 202194 A1, welches als der nächstliegende Stand der Technik angesehen wird, offenbart die Merkmale des Oberbegriffs des Anspruchs 1.

Die Aufgabe der vorliegenden Erfindung besteht darin, die Kraftwegkennlinie eines Aufpralldämpfers mit dem Ziel den Kraftüberschuss beim Deformationsbeginn zu glätten.

Erfindungsgemäß wird die Aufgabe dadurch gelöst, die Umformfläche der Matrize und der Konusbereich bezogen auf eine Bewegungsachse des Deformationsrohres einen unterschiedlichen Winkel einschließen.

Dadurch bedingt, dass der Konusbereich zur Umformfläche nur eine Linienberührung aufweist, ist die notwendige Umformkraft, die zu einer Axialbewegung des Deformationsrohres führt, geringer als bei einer vollflächigen Anlage. Diese geringere Anfangsumformkraft bis zur vollflächigen Anlage des Konusbereichs an de Umformfläche, die ab einem definierten Deformationsweg vorliegt, bestimmt die Kraftkennlinie des Aufpralldämpfers. Je größer der Unterschied zwischen den beiden eingeschlossenen Winkeln ist, umso flacher steigt die Kraftkennlinie ausgehend von der Ausgangsstellung bis zur vollflächigen Anlage an.

Bei einer ersten Ausführungsvariante ist der Winkel zwischen der Umformfläche und der Bewegungsachse eingeschlossene Winkel flacher als der Winkel zwischen dem Konusbereich und der Bewegungsachse. Da der Außendurchmesser der Umformfläche im Wesentlichen identisch ist mit dem Außendurchmesser des Konusbereichs, besteht eine Linienberührung auf einem vergleichsweise großen Teilkreis. Folglich ist auch die Anfangsumformkraft größer als bei einer Ausführungsform, bei der der Winkel zwischen der Umformfläche und der Bewegungsachse eingeschlossene Winkel steiler ist als der Winkel zwischen dem Konusbereich und der Bewegungsachse. Dann liegt nicht eine Linienberührung auf einem Innendurchmesser des Konusbereichs vor. Ein kleinerer Berührdurchmesser reduziert auch die notwendige Umformkraft, um eine weitere Deformationsbewegung fortzusetzen.

Eine weitere Maßnahme, um die Anfangsumformkraft zu reduzieren besteht darin, dass die Umformfläche und der Konusbereich einen Schmierstoffraum begrenzen. Bei einer Deformationsbewegung wird der im Schmierstoffraum eingeschlossene Schmierstoff in den Kontaktbereich zwischen der Matrize und dem Deformationsrohr verdrängt und bildet einen reibungsreduzierenden Schmierfilm.

In weiterer vorteilhafter Ausgestaltung weist die Matrize einen Führungsabschnitt auf, der sich der Umformfläche in Richtung der Aufprallplatte anschließt. Der Führungsabschnitt verhindert ein radiales Auswandern des Deformationsrohres und erzeugt damit eine definierte Umformbewegung und folglich auch eine gut reproduzierbare Kraftkennlinie des Aufpralldämpfers.

Bevorzugt ist eine Führungsfläche des Führungsabschnitts zu einem sich dem Konusbereich anschließenden Deformationsbereich abgedichtet. Vorteilhafterweise wird damit einer Kontaktkorrosion zwischen der Umformfläche und dem Konusbereich entgegengewirkt.

Im Hinblick auf ein geringes Eigengewicht besteht das Deformationsrohr zumindest aus einer Aluminiumlegierung.

Ergänzend oder alternativ kann auch die Matrize zumindest aus einer Aluminiumlegierung bestehen.

Um ein verbessertes Reibverhalten zwischen dem Konusbereich und der Umformfläche zu erreichen ist der unmittelbare Kontaktbereich zwischen der Matrize und dem Deformationsrohr frei von Aluminiumoxid.

Um eine definierte Position des Deformationsrohres zu bestimmen, ist das Deformationsrohr zwischen einem Sicherungsring und der Umformfläche gelagert.

Anhand der folgenden Figurenbeschreibung soll die Erfindung näher erläutert werden.
- Fig. 1 u. 3: Aufpralldämpfer mit unterschiedlichen Winkeln zwischen einer Umformfläche und einem Konusbereich
- Fig. 2 u. 4: Detaildarstellungen zu den Fig. 1 und 3
- Fig. 5: Deformationskraft-Weg-Diagramm
- Fig. 6: Aufpralldämpfer mit innenliegender Matrize

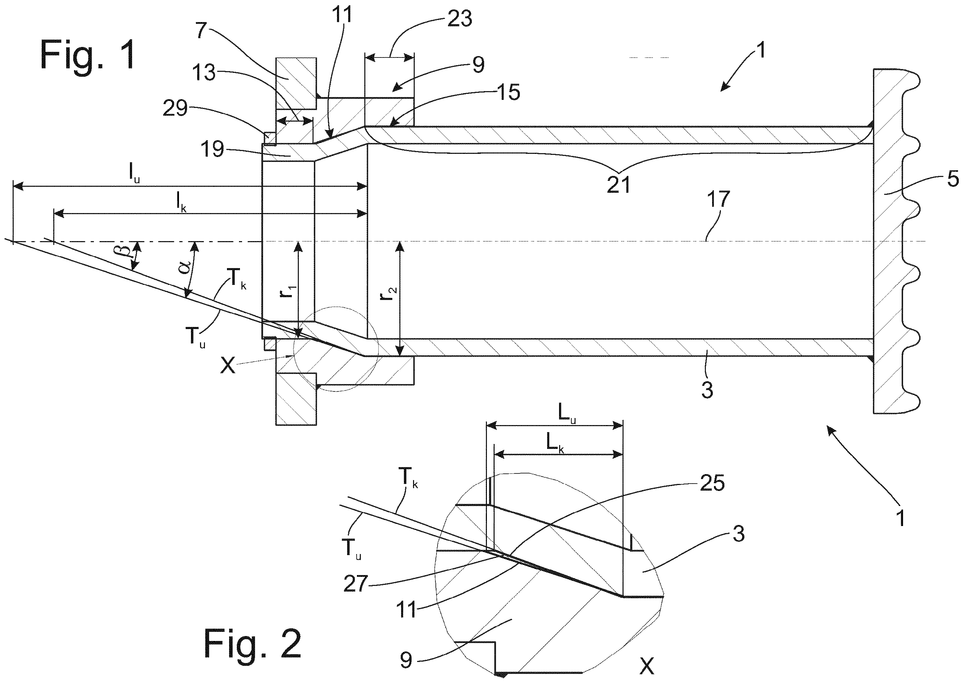

Die Figur 1 zeigt vereinfacht einen Aufpralldämpfer 1, wie er insbesondere für Schienenfahrzeuge eingesetzt wird. Der Aufpralldämpfer 1 umfasst mindestens ein Deformationsrohr 3; das endseitig an einer gemeinsamen Aufprallplatte 5 angeschlossen sind. Die Aufprallplatte 5 bildet die vorderste Ebene eines Fahrzeugs und stellt damit den Kontakt zwischen einem nicht dargestellten Hindernis und dem Aufpralldämpfer 1 her. Am anderen Ende verfügt der Aufpralldämpfer 1 über eine Halteplatte 7, an der das Deformationsrohr 3 am Fahrzeug befestigt sind.

Mit der Halteplatte 7 ist eine Matrize 9 verbunden, die am Innendurchmesser eine Umformfläche 11 aufweist. Die Umformfläche 11 erstreckt sich ausgehend von einer inneren Führungsfläche 13 mit dem Radius r₁ bis zu einer äußeren Führungsfläche 15 mit dem Radius r₂ unter einem Winkel α zu einer Bewegungsachse 17 des Aufpralldämpfers 1. Der zwischen der Umformfläche 11 und der Bewegungsachse 17 eingeschlossene Winkel α ist kleiner 90°.

Das Deformationsrohr 3 verfügt über einen ersten Führungsabschnitt 19, der mit der inneren Führungsfläche 13 zusammenwirkt und einem Deformationsbereich 21, der an der äußeren Führungsfläche 15 der Matrize 9 anliegt. Die äußere Führungsfläche 15 ist an einem Innendurchmesser eines zweiten Führungsabschnitts 23 ausgeführt, der sich in Richtung er Aufprallplatte 5 anschließt.

Die äußere Führungsfläche 15 ist bevorzugt zum Deformationsbereich 21 abgedichtet. Die Abdichtung kann als eine einfache Spaltdichtung durch eine entsprechende Maßhaltigkeit des Deformationsbereichs 21 und der äußeren Führungsfläche 15 erreicht werden. Optional kann die Führungsfläche 15 auch einen separaten Dichtring tragen.

In der Figur 1 sind Tangenten T_{U}; T_{K} zu der Umformfläche 11 und zu einem Konusbereich 25 eingetragen. Der Konusbereich 25 erstreckt sich am Deformationsrohr 3 zwischen dem ersten Führungsabschnitt 19 die dem Deformationsbereich 21. Die Tangente T_{U} schneidet die Bewegungsachse 17 des Aufpralldämpfers 1 in einem größeren Abstand I_{U} zum maximalen Durchmesser der Umformfläche 11 als die Tangente T_{K} mit dem Abstand I_{K}. Dieser maximale Durchmesser ist auch der maximale Durchmesser des Konusbereichs 25 und damit dem Außendurchmesser des Deformationsrohres 3 bzw. Deformationsbereichs 21. Bei identischem Maß r₂ verringert sich der eingeschlossene Winkel je größer der Abstand I ist.

In der Fig. 2 ist ein Ausschnitt aus der Fig. 1 im Bereich der Umformfläche 11 und des Konusbereichs 25 dargestellt. Wie man leicht erkennen kann, ist eine projizierte Länge L_{U} der Umformfläche 11 größer als eine projizierte Länge L_{K} des Konusbereichs 25. Beide Bemaßungsformen der Umformfläche 11 und des Konusbereichs 25 zeigen, dass der zwischen der Umformfläche 11 und der Bewegungsachse 17 eingeschlossene Winkel α kleiner bzw. flacher ist als der eingeschlossene Winkel β zwischen dem Konusbereich 25 und der Bewegungsachse 17, die im übrigen auch die Mittelachse des Deformationsrohres 3 bildet.

Aufgrund der unterschiedlichen Winkel α; β der Umformfläche 11 und des Konusbereichs 25 zur Bewegungsachse 17 begrenzen diese einen Schmierstoffraum 27. Den Abschluss des Schmierstoffraums 27 bilden der erste Führungsabschnitt 19 und der zweite Führungsabschnitt 23. Des Weiteren besteht damit zwischen der Umformfläche 11 der Matrize 9 und dem Konusbereich 25 nur eine Linienberührung im Bereich des äußeren Führungsabschnitts 19.

Zusammengehalten werden das Deformationsrohr 3 und die Matrize 9 über einen Sicherungsring 29, der an dem Deformationsrohr 3 befestigt ist und dem Konusbereich 25 gegenüberliegend angeordnet ist, so dass die Matrize 9 zwischen dem Sicherungsring 29 und dem Konusbereich 25 des Deformationsrohres 3 gelagert ggf. fixiert ist.

Sowohl das Deformationsrohr 3 wie auch die Matrize 9 bestehen bevorzugt zumindest aus einer Aluminiumlegierung, um das Eigengewicht des Aufpralldämpfers 1 zu minimieren. Dabei wird/werden zumindest der Konusbereich 25 und/oder die Umformfläche 11 von einer Aluminiumoxidschicht befreit.

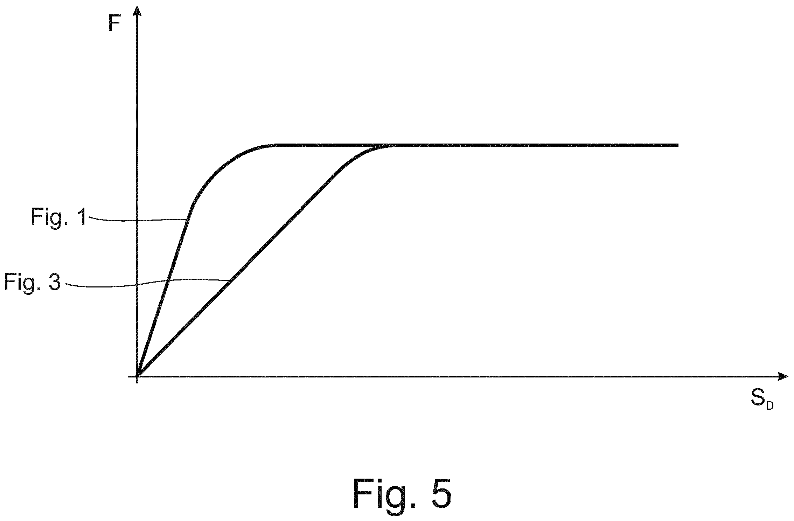

Die Figur 5 zeigt ein Deformationskraft-Weg-Diagramm. Die Abszisse steht für den Deformationsweg S_{D} und die Ordinate für die Deformationskraft F. Bei einer axialen Deformation des Aufpralldämpfers 1 wird das Deformationsrohr 3 über die Aufprallplatte 5 in die Matrize 9 gepresst. In der Ausgangsposition des Aufpralldämpfers besteht nur eine Linienberührung zwischen dem Deformationsrohr 3 und der Matrize 9 im Bereich des zweiten Führungsabschnitts 23, also auf einem vergleichsweise großen Berührkreis. Bei einer Krafteinleitung verformt sich das Deformationsrohr 3 deshalb anfangs nur im Bereich des Außendurchmessers bis eine vollflächige Anlage des Konusbereichs 25 an der Umformfläche 11 vorliegt. Danach stellt sich eine nahezu konstante Umformkraft ein. Diese Kraftkennlinie verfügt deshalb über einen ersten vergleichsweise steilen Anstieg, der dann in den horizontalen Kennlinienbereich übergeht. Eine Kraftspitze mit einem Überschwingen über den horizontalen Kennlinienbereich tritt nicht auf. Gerade diese Kennliniencharakteristik ist besonders vorteilhaft für den Aufpralldämpfer 1. Bei der Deformation des Deformationsrohres 3 bis zur vollflächigen Anlage des Konsusbereichs 25 an die Umformfläche 11 wird der Schmierstoffraum 27 komprimiert und der darin enthaltene Schmierstoff verteilt sich entlang des Kontaktbereichs, wodurch tendenziell eine Herabsetzung des Reibungskoeffizienten erreicht wird.

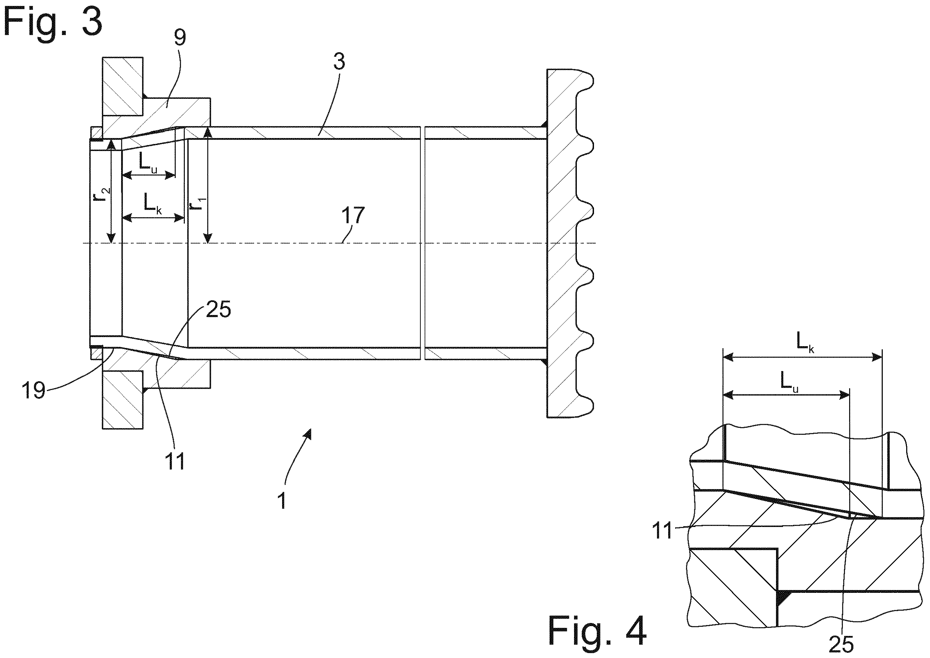

Die Figuren 3 und 4 beschreiben einen Aufpralldämpfer 1, der sehr ähnlich aufgebaut ist wie in den Figuren 1 und 2. Abweichend sind lediglich die Winkel α; β der Umformfläche 11 und des Konusbereichs 25 zur Bewegungsachse 17 ausgeführt. Wie eindeutig zu erkennen ist, ist die projizierte Länge L_{U} der Umformfläche 11 kürzer als die projizierte Länge L_{K} des Konusbereichs 25. Folglich ist der eingeschlossene Winkel α zwischen der Umformfläche 11 und der Bewegungsachse 17 größer bzw. steiler als der eingeschlossene Winkel β zwischen dem Konusbereich 25 und der Bewegungsachse. Damit liegt ein Berührkreis zwischen dem Konusbereich 25 und der Umformfläche 11 auf dem Durchmesser des ersten, also des kleineren Führungsabschnitts 19 vor.

Ausgehend von der Darstellung gemäß der Fig. 3 ergibt damit ein flacherer Kennlinienanstieg, s. Fig. 5, als bei der Variante nach Fig. 1.

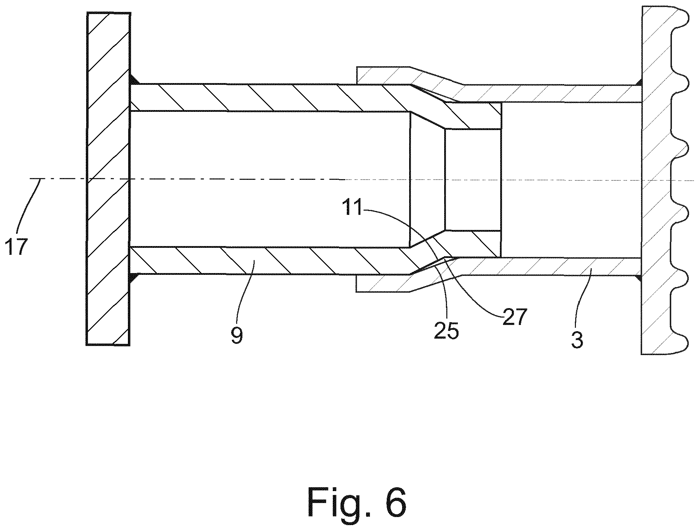

In den Darstellungen nach den Figuren 1 - 4 wird das Deformationsrohr 3 stets in eine Öffnung einer Matrize 9 gepresst, d. h. die Matrize 9 greift stets am Außendurchmesser des Deformationsrohres 3 an. Man kann die Matrize 9 auch, wie vereinfacht in der Fig 6 gezeigt ist, am Innendurchmesser des Deformationsrohres 3 angreifen lassen, um diese radial aufzuweiten. Dabei kann die Umformfläche 11 bezogen auf die Bewegungsachse 17 einen kleineren oder einen größeren Winkel α aufweisen als der Winkel zwischen dem Konusbereich 25 und der Bewegungsachse 17.

### Bezugszeichen

- 1: Aufpralldämpfer
- 3: Deformationsrohr
- 5: Aufprallplatte
- 7: Halteplatte
- 9: Matrize
- 11: Umformfläche
- 13: innere Führungsfläche
- 15: äußere Führungsfläche
- 17: Bewegungsachse
- 19: ersten Führungsabschnitt
- 21: Deformationsbereich
- 23: zweiter Führungsabschnitt
- 25: Konusbereich
- 27: Schmierstoffraum
- 29: Sicherungsring

## Patentansprüche

1. Aufpralldämpfer (1), insbesondere für ein Schienenfahrzeug, umfassend mindestens ein Deformationsrohr (3), das an einer Aufprallplatte (5) angeschlossen ist und bei einem Aufprallereignis entlang einer Matrize (9) mit einer konischen Umformfläche (11) bewegt wird, wobei das Deformationsrohr (3) einen Konusbereich (25) aufweist, der mit der Umformfläche (11) der Matrize (9) in Überdeckung steht, **dadurch gekennzeichnet, dass** die Umformfläche (11) der Matrize (9) und der Konusbereich (25) bezogen auf eine Bewegungsachse (17) des Deformationsrohres (3) einen unterschiedlichen Winkel (α; β) einschließen.

2. Aufpralldämpfer nach Anspruch 1, **dadurch gekennzeichnet, dass** der zwischen der Umformfläche (11) und der Bewegungsachse (17) eingeschlossene Winkel (α) flacher ist als der Winkel (β) zwischen dem Konusbereich (25) und der Bewegungsachse (17).

3. Aufpralldämpfer nach Anspruch 1, **dadurch gekennzeichnet, dass** der zwischen der Umformfläche (11) und der Bewegungsachse (17) eingeschlossene Winkel (α) steiler ist als der Winkel (β) zwischen dem Konusbereich (25) und der Bewegungsachse (17).

4. Aufpralldämpfer nach Anspruch 1, **dadurch gekennzeichnet, dass** die Umformfläche (11) und der Konusbereich (25) einen Schmierstoffraum (27) begrenzen.

5. Aufpralldämpfer nach Anspruch 1, **dadurch gekennzeichnet, dass** die Matrize (9) einen Führungsabschnitt (23) aufweist, der sich der Umformfläche (11) in Richtung der Aufprallplatte (5) anschließt.

6. Aufpralldämpfer nach Anspruch 5, **dadurch gekennzeichnet, dass** eine Führungsfläche (15) des Führungsabschnitts (23) zu einem sich dem Konusbereich (25) anschließenden Deformationsbereichs (21) abgedichtet ist.

7. Aufpralldämpfer nach Anspruch 1, **dadurch gekennzeichnet, dass** das Deformationsrohr (3) zumindest aus einer Aluminiumlegierung besteht.

8. Aufpralldämpfer nach Anspruch 1, **dadurch gekennzeichnet, dass** die Matrize (9) zumindest aus einer Aluminiumlegierung besteht.

9. Aufpralldämpfer nach Anspruch 1, **dadurch gekennzeichnet, dass** der unmittelbare Kontaktbereich zwischen der Matrize (9) und dem Deformationsrohr (3) frei ist von Aluminiumoxid.

10. Aufpralldämpfer nach Anspruch 5, **dadurch gekennzeichnet, dass** das Deformationsrohr (3) zwischen einem Sicherungsring (29) und der Umformfläche (11) gelagert ist.

## Claims

1. Impact damper (1), in particular for a rail vehicle, comprising at least one deformation tube (3) which is connected to an impact plate (5) and, in the case of an impact event, is moved along a matrix (9) having a conical forming surface (11), wherein the deformation tube (3) has a cone region (25) which is in overlap with the forming surface (11) of the matrix (9), **characterized in that** the forming surface (11) of the matrix (9) and the cone region (25) enclose a different angle (α; β) with respect to a movement axis (17) of the deformation tube (3).

2. Impact damper according to Claim 1, **characterized in that** the angle (α) enclosed between the forming surface (11) and the movement axis (17) is flatter than the angle (β) between the cone region (25) and the movement axis (17).

3. Impact damper according to Claim 1, **characterized in that** the angle (α) enclosed between the forming surface (11) and the movement axis (17) is steeper than the angle (β) between the cone region (25) and the movement axis (17).

4. Impact damper according to Claim 1, **characterized in that** the forming surface (11) and the cone region (25) delimit a lubricant chamber (27).

5. Impact damper according to Claim 1, **characterized in that** the matrix (9) has a guide portion (23) which adjoins the forming surface (11) in the direction of the impact plate (5).

6. Impact damper according to Claim 5, **characterized in that** a guide surface (15) of the guide portion (23) is sealed with respect to a deformation region (21) adjoining the cone region (25).

7. Impact damper according to Claim 1, **characterized in that** the deformation tube (3) consists at least of an aluminium alloy.

8. Impact damper according to Claim 1, **characterized in that** the matrix (9) consists at least of an aluminium alloy.

9. Impact damper according to Claim 1, **characterized in that** the direct contact region between the matrix (9) and the deformation tube (3) is free from aluminium oxide.

10. Impact damper according to Claim 5, **characterized in that** the deformation tube (3) is mounted between a securing ring (29) and the forming surface (11).

## Revendications

1. Amortisseur de chocs (1), en particulier pour un véhicule ferroviaire, comprenant au moins un tube de déformation (3), qui est assemblé à une plaque d'impact (5) et qui en cas de collision est déplacé le long d'une matrice (9) ayant une face de déformation conique (11), dans lequel le tube de déformation (3) présente une zone conique (25), qui se trouve en recouvrement avec la face de déformation (11) de la matrice (9), **caractérisé en ce que** la face de déformation (11) de la matrice (9) et la zone conique (25) forment par rapport à un axe de mouvement (17) du tube de déformation (3) un angle différent (α; β).

2. Amortisseur de chocs selon la revendication 1, **caractérisé en ce que** l'angle (α) formé entre la face de déformation (11) et l'axe de mouvement (17) est plus plat que l'angle (β) formé entre la zone conique (25) et l'axe de mouvement (17).

3. Amortisseur de chocs selon la revendication 1, **caractérisé en ce que** l'angle (α) formé entre la face de déformation (11) et l'axe de mouvement (17) est plus raide que l'angle (β) formé entre la zone conique (25) et l'axe de mouvement (17).

4. Amortisseur de chocs selon la revendication 1, **caractérisé en ce que** la face de déformation (11) et la zone conique (25) limitent une chambre de lubrifiant (27) .

5. Amortisseur de chocs selon la revendication 1, **caractérisé en ce que** la matrice (9) présente une partie de guidage (23), qui se raccorde à la face de déformation (11) en direction de la plaque d'impact (5).

6. Amortisseur de chocs selon la revendication 5, **caractérisé en ce qu'**une face de guidage (15) de la partie de guidage (23) est étanche par rapport à une zone de déformation (21) se raccordant à la zone conique (25).

7. Amortisseur de chocs selon la revendication 1, **caractérisé en ce que** le tube de déformation (3) se compose au moins d'un alliage d'aluminium.

8. Amortisseur de chocs selon la revendication 1, **caractérisé en ce que** la matrice (9) se compose au moins d'un alliage d'aluminium.

9. Amortisseur de chocs selon la revendication 1, **caractérisé en ce que** la zone de contact directe entre la matrice (9) et le tube de déformation (3) est exempte d'oxyde d'aluminium.

10. Amortisseur de chocs selon la revendication 5, **caractérisé en ce que** le tube de déformation (3) est monté entre un anneau de fixation (29) et la face de déformation (11).
